Europäisches Patentamt

European Patent Office

Office européen des brevets

(11) Publication number: **0 107 490**
**B1**

(12) **EUROPEAN PATENT SPECIFICATION**

(45) Date of publication of patent specification: **07.09.88**

(21) Application number: **83306398.5**

(22) Date of filing: **21.10.83**

(51) Int. Cl.⁴: **B 23 P 15/40,** B 29 C 47/02

(54) **A matrix assembly.**

(30) Priority: **22.10.82 GB 8230299**

(43) Date of publication of application:
**02.05.84 Bulletin 84/18**

(45) Publication of the grant of the patent:
**07.09.88 Bulletin 88/36**

(84) Designated Contracting States:
**AT BE CH DE FR GB IT LI LU NL SE**

(56) References cited:
**CH-A- 589 199**
**DE-A-2 151 384**
**GB-A-1 485 361**

(73) Proprietor: **Snodgrass, Francis Mattlage**
**527 Clifton Drive North**
**Lytham St. Annes Lancashire FY8 2QU (GB)**

(72) Inventor: **Snodgrass, Francis Mattlage**
**527 Clifton Drive North**
**Lytham St. Annes Lancashire FY8 2QU (GB)**

(74) Representative: **Meeks, Frank Burton et al**
**Urquhart-Dykes & Lord 47 Marylebone Lane**
**London W1M 6DL (GB)**

EP 0 107 490 B1

Courier Press, Leamington Spa, England.

## Description

The present invention relates generally to the scoring or creasing of card-like material and, more particulary, relates to a method for manufacturing a matrix assembly for use in forming creases or score lines in card-like material.

The technique of scoring material involves the partial cutting of the material whereas creasing of material generally does not involve any cutting to the material. It will be understood that as used herein, the term "creasing" is intended to cover both the creasing or scoring of material.

Card-like material is creased to facilitate being folded into its final shape by pressing the material between a creasing rule of a cutting and creasing press, and a creasing matrix. The creasing matrix comprises a long flexible strip having a channel formed longitudinally therein which is slightly wider than the creasing rule. The matrix strip is fastened to a press platen so that its channel is aligned with the creasing rule edge so that on closing the press the rule edge urges the portion of the card comprising the crease into the matrix channel to provide a well-defined crease. Various matrix constructions are known. For example, reference is made to the following patents which disclose typical constructions of matrix strips: US—A—2,524,962 (Dalsemer), US—A—2,765,716 (Andersson), US—A—3,113,898 (Tross), US—A—3,213,767 (Tomak), US—A—3,526,566 (McIlvain, Jr., et al.), US—A—3,884,132 (Snodgrass), US—A—3,919,924 (Snodgrass), GB—A—681,632 (Andersson), GB—A—807,251, and GB—A—909,331 (Squire).

The matrix strips proposed in the various patents identified above include constructions wherein the matrix strip is formed as a one-piece integral member and, additionally, constructions wherein the matrix strip is formed as an assembly wherein one or more plastic strips are attached to a metallic base strip to form the longitudinal matrix channel. The present invention is directed to the latter type of construction wherein the matrix strip comprises an assembly including one or more plastic strips which are attached to a metallic base strip.

Indeed, a starting point of the present invention comprises the method disclosed in GB—A—909,331 (Squire). This patent discloses a method of manufacturing a matrix base assembly wherein a metallic strip initially has two transversely spaced longitudinal lines of perforations formed in it, these lines of perforations each being adjacent to a respective edge of the metallic strip. The perforations are formed so that teeth-like projections extend substantially perpendicularly from the plane of the metallic strip around the periphery of each perforations. The metallic strip then travels around a heated roller whereby the metallic strip is heated. A pair of previously formed mutually spaced plastic strips are then fed between another roller and the heated roller whereupon the plastic strips are forced against the teeth-like projections of the heated metallic strip whereupon the plastic is partially melted to effect a bond between the plastic and metallic strips. The heat conducted to the metallic strip causes the plastic to melt and flow around the projections and into the apertures formed in the metallic strip. Alternatively, the plastic strips can be re-heated by means other than by conductance from the metal strip to cause the plastic to flow into the apertures. In any event, the matrix assembly disclosed in GB—A—909,331 is formed by reheating the previously formed plastic strips and then tamping them in a mutually spaced manner onto edge regions of the metallic strip to define a central channel extending longitudinally along the formed matrix assembly.

Certain drawbacks exist in the conventional method of manufacture of the matrix assembly described above. For example, gaps or spaces can be formed between the plastic strips and the metallic base strip during assembly, the existence of which restricts the use of the matrix assembly to relatively short production runs. In particular, it has been found that the plastic strips are eventually loosened from the metallic base strip by the continuous up and down pressure of the card-like material passing through the creasing press. This loosening eventually results in a breaking up of the assembly and it is not possible to know exactly when such breaking up might occur and it is not possible to replace the matrix assembly in time to prevent the break up during a production run.

Moreover, as the speed of assembly of the matrix assembly is increased, the quality of the completed matrix assembly decreases.

## Summary of the invention

Accordingly, it is an object of the present invention to provide a new and improved method of manufacturing a matrix assembly for scoring or creasing card material.

Another object of the present invention is to provide a new and improved method of manufacturing a matrix assembly which alleviates the disadvantages inherent in the conventional method described above.

According to the present invention there is provided a method of manufacturing a matrix assembly (18) for use in creasing card material, in co-operation with a creasing rule of a cutting and creasing press, said matrix assembly (18) consisting of one or more plastic strips (12) attached to a metallic base strip (2) and said plastic strip or strips (12) defining a longitudinal channel (14) adapted to receive a region of the card material to be creased, comprising the steps of moving the elongate metallic base strip (12) in a continuous manner in a direction substantially parallel to its longitudinal axis to an extruding/combining station (8), and extruding plastics material directly onto at least one surface of the metallic base strip (2) as the base strip is being moved through the extruding/combining station (8) to form thereon the plastics strip or strips (12) and define the channel (14) extruding longitudinally of the metallic base strip (2).

The one or more plastic strips may be extruded onto the metallic base strip in a direction transverse to the direction of travel of the metallic base strip and, in a preferred arrangement, the plastic material may be applied to the metallic base strip in a cross head combining die.

Two transversely spaced longitudinal rows of apertures may be initially formed in the metallic base strip adjacent to the respective edges of the strip whereupon two transversely spaced plastic strips are directly extruded onto the apertured regions of the metallic base strip.

In another embodiment, the side portions of the metallic base strip are encapsulated during the extrusion process in the transversely spaced plastic strips.

The metallic strip is preferably conditioned and degreased before the plastic material is extruded onto it. This operation can be carried out using a propane torch or the like.

Since the plastic is extruded directly onto the metallic base strip as a primary process in accordance with the invention, there is no possibility of any space or gap existing between the plastic and the metallic base strip. In this manner, the possibility of the plastic strip breaking away from the metallic strips is drastically reduced relative to the case wherein the matrix assembly is manufactured in accordance with the conventional technique. A matrix assembly constructed in accordance with the invention can be manufactured to required tolerances at much higher production speeds thereby reducing unit costs. Moreover, with automated production, higher output produces a superior product. The reverse is the case with the conventional techniques described above.

Additional advantages are obtained by the present invention. Thus, since the plastic material is extruded in accordance with the invention, an option exists to add design features which is not possible using conventional techniques. The dimensions of the matrix assembly can be changed with substantially lower tooling costs. Moreover, since the matrix assembly is extruded, other types of plastic can be used to increase wear resistance and, therefore, the anticipated life of the product.

Detailed description of the drawings

A more complete appreciation of the present invention and many of the attendant advantages thereof will be readily understood by reference to the following detail description when considered in connection with the accompanying drawings, in which:

Fig. 1 is a block schematic diagram of an apparatus for carrying out a method in accordance with the present invention;

Fig. 2 is a top plan view of a metallic base strip comprising a component of a matrix assembly in accordance with the invention;

Fig. 3 is a section view taken along line 3—3 of Fig. 2;

Fig. 4 is a transverse cross-sectional view of a matrix assembly constructed in accordance with the present invention;

Fig. 4a is a section view taken along line 4a—4a of Fig. 4;

Fig. 5 is a top plan view of the matrix assembly illustrated in Fig. 4; and

Figs. 6—8 are transverse sectional views of additional embodiments of matrix assemblies in accordance with the invention.

Description of the preferred embodiments

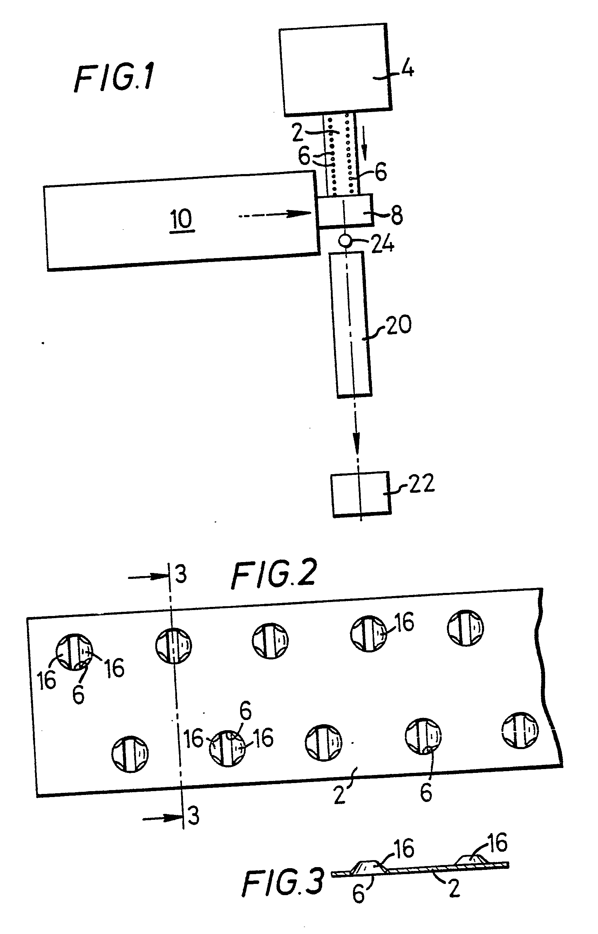

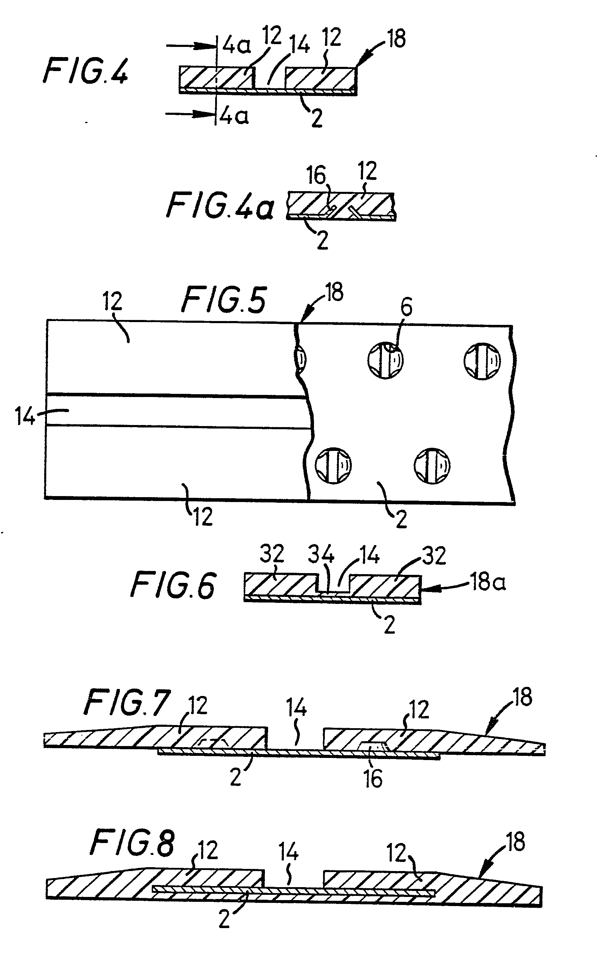

Referring now to the drawings wherein like reference characters designate identical or corresponding parts throughout the several views, and more particularly to Figs. 1—5, a base strip 2 formed of any suitable metallic material, such as steel, is passed through a perforating machine 4 which forms two transversely spaced longitudinal rows of perforations or apertures 6 in the strip 2 adjacent to respective edges thereof. As best seen in Figs. 2 and 3, the steel base strip 2 is pierced in the perforating machine 4 in a manner such that peripheral projections or walls 16 extend upwardly therefrom, preferably angled towards each other. The particular configuration of the walls 16 depends on the nature of the piercing operation performed by the perforating machine 4 so that it will be understood that the upwardly extending walls 16 can have configurations other than that shown in the figures.

The perforated metallic base strip 2 is passed in a continuous manner through a cross-head extrusion/combining die 8 in a direction parallel to the longitudinal axis of the base strip 2. At the same time a suitable plastic material, described below, is extruded by an extruder 10 in a direction perpendicular to the direction of travel of the metallic base strip 2 into the cross-head extrusion/combining die 8 so that the plastic material is extruded onto and through the perforations 6. Thus, the plastic material is directly extruded onto the base strip 2 so that the heated plastic material flows into the apertures 6 under the projections or walls 16. In the embodiment illustrated in Figs. 2—5, the cross-head extrusion/combining die is designed and arranged so that the plastic material is extruded directly onto the metallic base strip 2 so as to form thereon two transvesely spaced plastic strips 12 which define a central channel 14 extending longitudinally along the longitudinal axis of the base strip 2.

Referring to Fig. 4a, it is seen that in accordance with the illustrated embodiment of the invention, the plastic material flows through the apertures 6 beneath the walls or projections 16 of the aperture or perforations 6. The walls 16 assist in retaining the plastic strips 12 on the metallic base strip 2, such retention being even greater in the case where the walls 16 are angled upwardly towards each other.

In this manner a matrix assembly 18 is formed which comprises the plastic strips 12 intimately bonded to the metallic base strip 2. The matrix assembly 18 is drawn from the cross-head extrusion/combining die 8 by a conventional caterpillar take-off mechanism 20 whereupon the matrix assembly 18 is wound onto a winding unit 22.

Before the steel base strip 2 reaches the die 8, the steel is preferably conditioned and degreased by means of a propane torch directed onto the strip upstream of the die 8.

One of the important advantages of the present invention is that in view of the fact that the matrix assembly is formed by directly extruding plastics material onto the metallic base strip, various types of plastics can be used which will maximize wear resistance and, therefore, the anticipated life of the matrix assembly. For example, polyvinylchloride, polycarbonate, Norly (trade mark) and ABS (acrylonitrile-butadiene-styrene copolymers) are suitable for use in the manufacture of the matrix assembly in accordance with the invention.

An adjustable roller 24 can be provided immediately downstream of the cross-head extrusion/combining die 8 to vary the angle at which the matrix assembly 18 exists from the die 8.

Referring to Figure 6, another embodiment of a matrix assembly, designated 18a, constructed in accordance with the present invention is illustrated. Matrix assembly 18a differs from matrix assembly 18 described above in that instead of directly extruding plastic material onto the metallic base strip 2 so as form a pair of plastics strips 12, the plastic material is directly extruded onto the metallic base strip 2 in the form of a single strip, designated 30. The plastic strip 30 comprises a pair of ridges 32 integrally connected by thin plastic web 34. The ridges 32 are mutually spaced to form the channel 14 with the web 34 constituting the bottom of the channel 14.

In the embodiment illustrated in Figs. 2—6, the plastic strips 12 or plastic strip 30 are fully supported by the steel base strip 2.

Referring to the embodiment illustrated in Fig. 7, the plastic material is extruded in the form of a pair of plastic strips 12 which slope downwardly and outwardly and extend outwardly beyond the sides of the steel base strip 2. In this embodiment, the base strip 2 is perforated in a manner similar to the embodiments described above to facilitate retention of the plastic strips on the metallic base strip.

Referring now to the embodiment illustrated in Fig. 8, the plastic material is directly extruded onto the metallic base strip 2 in a manner such that the base strip is encapsulated in the plastic strips 12. Because of the additional strength provided by such encapsulation, the metallic base strip 2 need not be perforated.

As an example of typical dimensions, the metallic base strip 2 of the embodiments of Figs. 4 and 6—8 has a width of 7 mm. In the embodiments of Figs. 4 and 6, the plastic strips 12 or plastic strip 30 also has a width of 7 mm. In the embodiments of Figs. 7 and 8, the plastic strips 12 have a width of 12 mm. In all cases, the central channel 14 has a width of 1.5 mm.

The matrix assembly constructed in accordance with the invention can be subsequently combined with a locater strip to facilitate the precise alignment of the central channel 14 with the associated creasing rule of a cutting and creasing press. In this connection, reference is made to US—A—3,919,924 which discloses the construction of such a locater strip and one technique for associating the locater strip with the matrix assembly. The disclosure of this patent is hereby incorporated herein by reference.

In summary, the method of manufacture in accordance with the invention provides an improved matrix assembly which eliminates any possibility of any space or gap existing between the plastic strip of strips and the steel base strip by virtue of the plastic being extruded directly onto the base strip as a primary process. This drastically reduces the possibility of the plastic strips eventually becoming loosened from the base strip by the constant up and down pressures existing in creasing presses. Additional design features can be easily added and sizes easily changed with substantially lower tooling costs. Various types of plastic can be used to increase wear resistance and the anticipated life of the matrix assembly. Moreover, it has been found that it is possible to increase the production speed and to reduce production costs of the matrix assembly in accordance with the invention without reducing manufacturing tolerances.

Obviously, numerous modifications and variations of the present invention are possible in the light of the above teachings. It is therefore to be understood that within the scope of the claims appended hereto, the invention may be practiced otherwise than as specifically disclosed herein.

## Claims

1. A method of manufacturing a matrix assembly (18) for use in creasing card material, in co-operation with a creasing rule of a cutting and creasing press, said matrix assembly (18) consisting of one or more plastic strips (12) attached to a metallic base strip (2) and said plastic strip or strips (12) defining a longitudinal channel (14) adapted to receive a region of the card material to be creased, comprising the steps of moving the elongate metallic base strip (2) in a continuous manner in a direction substantially parallel to its longitudinal axis to an extruding/combining station (8), and extruding plastics material directly onto at least one surface of the metallic base strip (2) as the base strip is being moved through the extruding/combining station (8) to form thereon the plastics strip or strips (12) and define the channel (14) extending longitudinally of the metallic base strip (2).

2. A method as claimed in claim 1 wherein prior to the metallic base strip (2) reaching the extruding/combining station (8), perforating the metallic base strip (2) to form at least one longitudinal row of perforations (6) therethrough, and wherein during said extruding step, the plastics material flows through said perforations (6).

7 **0 107 490** 8

3. A method as claimed in claim 1 wherein said extruding step includes extruding plastics material directly onto the metallic base strip (2) as the base strip (2) is being moved through the extruding/combining station (8) to form two parallel plastics strips (12) transversely spaced from each other to define said longitudinal channel (14).

4. A method as claimed in claim 3 wherein prior to the metallic base strip (2) reaching the extruding/combining station (8), perforating the metallic base strip to form two transversely spaced longitudinal rows of perforations (6), therein adjacent to respective longitudinal edges of the metallic base strip (2), and wherein during said extruding step, the two plastics strips (12) are formed on the respective regions of the metallic base strip (2) in which the two rows of perforations (6) are formed with the plastics material flowing through said perforations (6).

5. A method as claimed in claim 2 or claim 4, wherein during said perforating step upstanding projections (16) are formed in regions adjacent to each of the perforations (6).

6. A method as claimed in claim 5 wherein the projections (16) associated with each perforations (6) are angled upwardly toward each other, and wherein during said extruding step, the plastics material flows under the upstanding angled projections (16) associated with each perforation (6).

7. A method as claimed in any preceding claim wherein the plastics material is extruded through a cross-head extrusion/combining (8) die situated at said extruding/combining station (8).

8. A method as claimed in claim 1 wherein said extruding step includes extruding plastics material directly onto the metallic base strip (2) as the base strip is being moved through the extruding/combining station (8) to form a single plastics strip including a pair of transversely spaced ridges (32) interconnected by a thin web (34), said ridges (32) defining said longitudinal channel (14) with said web (34) defining the bottom of said channel (14).

9. A method as claimed in any preceding claim wherein the width of said at least one plastics strip (12) is substantially equal to the width of said metallic base strip (2).

10. A method as claimed in any one of claims 1 to 8, wherein the width of said at least one plastics strip (12) is greater than the width of said metallic base strip (2).

11. A method as claimed in claim 1 and claim 3 wherein said extruding step includes extruding plastics material directly onto the metallic base strip (2) as the metallic base strip (2) is being moved through the extruding/combining station (8) to encapsulate said metallic base strip in a plastics strip (12) defining said longitudinal channel (14).

12. A method as claimed in any preceding claim wherein prior to said metallic base strip (2) reaching said extruding/combining station (8), conditioning and degreasing said metallic base strip (2) prior to extruding plastics material onto said base strip (2).

**Patentansprüche**

1. Verfahren zur Herstellung einer Matrizeneinrichtung (18) zur Verwendung für das Knicken von Kartenmaterial im Zusammenwirken mit einem Knicklineal einer Scheid- und Knickmaschine, wobei die Matrizeneinrichtung (18) aus einem oder mehreren an einem metallischen Grundstreifen (2) befestigten Plastikstreifen (12) besteht und der oder die Plastikstreifen (12) einen für die Aufnahme des zu knickenden Bereichs des Kartenmaterials passenden Längskanal (14) bilden, wobei das Verfahren folgende Schritte umfaßt: das kontinuierliche Bewegen des länglichen metallischen Grundstreifens (2) in einer im wesentlichen zu seiner Längsachse parallelen Richtung zu einer Extrudier/Verbindungsstation (8) und das Extrudieren des Plastikmaterials direkt auf wenigstens eine Oberfläche des metallischen Grundstreifens (2), während der Grundstreifen durch die Extrudier/Verbindungsstation (8) bewegt wird, um darauf den oder die Plastikstreifen (12) zu formen und den sich in Längsrichtung auf dem metallischen Grundstreifen (2) erstreckenden Kanal (14) zu bilden.

2. Verfahren nach Anspruch 1, wobei der metallische Grundstreifen (2), bevor er die Extrudier/Verbindungsstation (8) erreicht, perforiert wird, um wenigstens eine Längsreihe von Perforationen (6) dadurch zu bilden, und wobei das Plastikmaterial während des Extrudiervorgangs durch die Perforationen (6) fließt.

3. Verfahren nach Anspruch 1, wobei der Extrudiervorgang das Extrudieren des Plastikmaterials direkt auf den metallischen Grundstreifen (2), während der metallische Grundstreifen (2) durch die Extrudier/Verbindungstation (8) bewegt wird, um zwei parallele in Querrichtung voneinander beabstandete Plastikstreifen (12) zu formen, die den Längskanal (14) bilden, einschließt.

4. Verfahren nach Anspruch 3, wobei der metallische Grundstreifen (2), bevor er die Extrudier/Verbindungsstation (8) erreicht, perforiert wird, um darin zwei in Querrichtung voneinander beabstandete Längsreihen von Perforationen (6) zu bilden, die den entsprechenden Längskanten des metallischen Grundstreifens (2) benachbart sind, und wobei während des Extrudiervorgangs die zwei Plastikstreifen (12) auf den entsprechenden Bereichen des metallischen Grundstreifens (2) gebildet werden, in denen die zwei Reihen von Perforationen (6) gebildet werden, wobei das Plastikmaterial durch die Perforationen (6) fließt.

5. Verfahren nach Anspruch 2 oder 4, wobei während des Perforationsvorgangs in den jeder der Perforationen (6) benachbarten Bereichen hervorstehende Vorsprünge (16) gebildet werden.

6. Verfahren nach Anspruch 5, wobei die jeweils einer Perforation (6) zugeordneten Vorsprünge (16) nach oben unter einem Winkel zueinander stehen, und wobei während des Extrudiervorgangs das Plastikmaterial unter die jeweils einer Perforation (6) zugeordneten hervorstehenden, unter einem Winkel stehenden Vorsprünge (16) fließt.

5

7. Verfahren nach einem der vorhergehenden Ansprüche, wobei das Plastikmaterial durch eine an der Extrudier/Verbindungsstation (8) angeordnete Querkopf-Extrudier/Verbindungs-Düse (8) gepreßt wird.

8. Verfahren nach Anspruch 1, wobei der Extrudiervorgang das Extrudieren des Plastikmaterials direkt auf den metallischen Grundstreifen (2), während der metallische Grundstreifen (2) durch die Extrudier/Verbindungsstation (8) bewegt wird, einschließt, um einen einzigen Plastikstreifen zu bilden, der ein Paar in Querrichtung voneinander beabstandeter Rippen (32) einschließt, die durch einen dünnen Steg (34) miteinander verbunden sind, wobei die Rippen (32) denie Lagskanal (14) und der Steg (34) den Boden des Kanals (14) bilden.

9. Verfahren nach einem der vorhergehenden Ansprüche, wobei die Breite des wenigstens einen Plastikstreifens (12) im wesentlichen die gleiche ist wie die des metallischen Grundstreifens (2).

10. Verfahren nach einem der Ansprüche 1 bis 8, wobei die Breite des wenigstens einen Plastikstreifens (12) größer ist als die des metallischen Grundstreifens (2).

11. Verfahren nach Anspruch 1 und 3, wobei der Extrudiervorgang das Extrudieren des Plastikmaterials direkt auf den metallischen Grundstreifen (2), während der metallische Grundstreifen durch die Extrudier/Verbindungsstation (8) bewegt wird, einschließt, um den metallischen Grundstreifen (2) in einen den Längskanal (14) bildenden Plastikstreifen (12) einzuschließen.

12. Verfahren nach einem der vorhergehenden Ansprüche, wobei der metallische Grundstreifen (2), bevor er die Extrudier/Verbindungsstation (8) erreicht, konditioniert und entfettet wird, bevor das Plastikmaterial auf den Grundstreifen (2) aufgepreßt wird.

**Revendications**

1. Procédé de fabrication d'une matrice (18) utilisable pour le rainurage ou prépliage d'une matière semblable à du carton, en coopération avec une règle de prépliage faisant partie d'une presse de coupe de prépliage, ladite matrice (18) étant composée d'une ou plusieurs bandes de matière plastique (12) fixées à une bande métallique de base (2) et la ou lesdites bandes de matière plastique (12) définissant un canal longitudinal (14) prévu pour recevoir une région de la matière de type carton à plier, qui comprend les opérations de déplacement de la bande métallique allongée de base (2) d'une manière continue dans une direction sensiblement parallèle à son axe longitudinal jusqu'à une station d'extrusion/combinaison (8), et d'extrusion de la matière plastique directement sur au moins une surface de la bande métallique de base (2) pendant que la bande de base traverse la station d'extrusion/combinaison (8), de manière à former sur la bande de base la ou les bandes de matière plastique (12) et à définir le canal (14) s'étendant dans la direction longitudinale de la bande métallique de base (2).

2. Procédé suivant la revendication 1, dans lequel, avant que la bande métallique de base (2) n'atteigne la station d'extrusion/combinaison (8), perfore la bande métallique de base (2) pour engendrer dans celle-ci au moins une rangée longitudinale de perforations (6), et dans lequel, pendant ladite opération d'extrusion, la matière plastique s'écoule à travers lesdites perforations (6).

3. Procédé suivant la revendication 1, dans lequel ladite opération d'extrusion comprend l'extrusion de la matière plastique directement sur la bande métallique de base (2) pendant le déplacement de la bande de base (2) à travers la station d'extrusion/combinaison (8), de manière à engendrer deux bandes parallèles de matière plastique (12) transversalement espacées l'une de l'autre pour définir ledit canal longitudinal (14).

4. Procédé suivant la revendication 3, dans lequel, avant que la bande métallique de base (2) n'atteigne la station d'extrusion/combinaison (8), on perfore la bande métallique de base de manière à engendrer deux rangées longitudinales transversalement espacées de perforations (6) adjacentes aux bords longitudinaux respectifs de la bande métallique de base (2), et dans lequel, pendant ladite opération d'extrusion, les deux bandes de matière plastique (12) sont formées sur les régions respectives de la bande métallique de base (2) où se trouvent les deux rangées de perforations (6), la matière plastique s'écoulant à travers lesdites perforations (6).

5. Procédé suivant la revendication 2 ou la revendication 4, dans lequel, pendant ladite opération de perforation, on forme des parois en saillie (16) dans les régions adjacentes à chacune des perforations (6).

6. Procédé suivant la revendication 5, dans lequel les saillies (16) associées à chaque perforation (6) sont inclinées vers le haut et l'une vers l'autre, et dans lequel, pendant ladite opération d'extrusion, la matière plastique s'écoule sous les saillies inclinées vers le haut (16) associées à chaque perforation (6).

7. Procédé suivant l'une quelconque des revendications précédentes, dans lequel la matière plastique est extrudée au moyen d'une filière d'extrusion/combinaison (8) du type à tête d'équerre, située à ladite station d'extrusion/combinaison (8).

8. Procédé suivant la revendication 1, dans lequel ladite opération d'extrusion comprend l'extrusion de la matière plastique directement sur la bande métallique de base (2) pendant le déplacement de la bande de base à travers la station d'extrusion/combinaison (8), de manière à engendrer une bande unique de matière plastique comportant deux surélévations transversalement espacées (32) interconnectées par une âme mince (34), lesdits surélévations (32) définissant ledit canal longitudinal (14) et ladite âme (34) définissant le fond dudit canal (14).

9. Procédé suivant l'une quelconque des revendications précédentes, dans lequel la largeur de ladite au moins une bande de matière plastique (12) est sensiblement égale à la largeur de ladite bande métallique de base (2).

10. Procédé suivant l'une quelconque des revendications 1 à 8, dans lequel la largeur de ladite au moins une bande de matière plastique (12) est supérieure à la largeur de ladite bande métallique de base (2).

11. Procédé suivant la revendication 1 et la revendication 3, dans lequel ladite opération d'extrusion comprend l'extrusion de la matière plastique directement sur la bande métallique de base (2) pendant le déplacement de la bande métallique de base (2) à travers la station d'extrusion/combinaison (8), de manière à encapsuler ladite bande métallique de base dans une bande de matière plastique (12) définissant ledit canal longitudinal (14).

12. Procédé suivant l'une quelconque des revendications précédentes, dans lequel, avant que ladite bande métallique de base (2) n'atteigne ladite station d'extrusion/combinaison (8), on traite et on dégraisse ladite bande métallique de base (2) avant l'extrusion de la matière plastique sur ladite bande de base (2).

*FIG.1*

*FIG.2*

*FIG.3*

FIG.4

FIG.4a

FIG.5

FIG.6

FIG.7

FIG.8